# EUROPÄISCHE PATENTSCHRIFT

(11) **EP 0 834 396 B1**
(45) Veröffentlichungstag und Bekanntmachung des Hinweises auf die Patenterteilung: **24.05.2000**
(21) Anmeldenummer: 97116043.7
(22) Anmeldetag: 16.09.1997
(51) Int. Cl.: B31D 1/02, B32B 31/10, B26F 1/10

(54) **Verfahren zum verlustfreien Stanzen von klebenden Stanzlingen**
Method of stamping adhesive articles without loss
Procédé de découpage sans pertes d'articles adhésifs

(30) Priorität: 04.10.1996 DE 19641094
(43) Veröffentlichungstag der Anmeldung: 08.04.1998
(73) Patentinhaber: Beiersdorf Aktiengesellschaft, 20245 Hamburg (DE)
(72) Erfinder: Schulze, Reiner, 20259 Hamburg (DE); Tichelmann, Dieter, 22143 Hamburg (DE)

(56) Entgegenhaltungen:
- WO-A-94/07449
- DE-C- 4 406 976
- US-A- 4 475 969

## Beschreibung

Der Erfindung betrifft das verlustfreie Stanzen von klebenden Stanzlingen aus einer endlosen Bahn, die zumindest einseitig mit einem Trennlaminat eingedeckt ist.

Die aus dem Stand der Technik vorbekannte Art der Herstellung von klebenden Stanzlingen erfolgt mittels des sogenannten Gitterstanzens. Dabei wird in eine endlose Bahn, die aus dem zu stanzenden Material besteht und die zumeist zumindest einseitig mit einem Trennlaminat eingedeckt ist, ein Gitter eingestanzt. Der Vorgang der Stanzung kann beispielsweise rotativ in der Schneidlinie zwischen einer Schneidwalze und einer Gegenwalze erfolgen.
Nach Entfernen des Stanzgitters in der Bahn bleiben die einzelnen Stanzlinge auf dem Trennlaminat zurück. Die Stegbreite des Gitters ist dabei so zu wählen, daß eine Berührung der einzelnen Stanzlinge ausgeschlossen ist, um das nachträgliche erneute Verkleben der Stanzlinge auszuschließen. Das Verkleben tritt insbesondere bei Stanzlingen aus einem fließfähigen, klebenden Material auf.
Dies Verfahren findet insbesondere in der Herstellung von Etiketten Verwendung. Weiterhin werden auf diese Weise auch Bahnen verarbeitet, die aus einer beidseitig selbstklebenden Klebfolie bestehen. Die Klebfolie ist dabei eine solche auf Basis von thermoplastischem Kautschuk und klebrigmachenden Harzen, mit hoher Elastizität und geringer Plastizität. Die aus dem Stanzvorgang resultierenden Stanzlinge sind unter anderem unter dem Namen "Posterstrips" ® der Firma Beiersdorf im Handel erhältlich.

Das beschriebene Verfahren ist aber mit einer Vielzahl von Nachteilen versehen. Das Stanzgitter, das je nach Material eine bedeutende Stegbreite aufweist, steht für eine Weiterverarbeitung nicht zur Verfügung. Es landet daher in den meisten Fällen im Abfall.

Damit ist ein nicht unerheblicher Verlust an Material verbunden, der teilweise den Materialmengen entspricht, die insgesamt in den produzierten Stanzlingen verarbeitet werden. Dies ist aus betriebswirtschaftlichen Erwägungen sehr unbefriedigend. Darüber hinaus sollte ein Verlust schon aus ökologischer Sicht vermieden werden.

In der DE 35 11 717 C2 wird ein Verfahren beschrieben, mit dem ein Trägerband mit auf diesem Trägerband lösbar haftenden Selbstklebeetiketten hergestellt werden kann. Dazu werden auf dem Trägerband beidseitig selbstklebend ausgerüstete Folien- oder Papierbahnen aufgebracht. Diese Trägerband wird in ein Stanzwerkzeug geführt, in dem die oberen und die unteren Folien- oder Papierbahnen gleichzeitig und deckungsgleich übereinander gestanzt werden. Aber auch diese Art des Stanzens ist nur mittels eines Stanzgitters möglich, das nach dem Stanzen von dem Trägerband abgezogen wird.

Die WO-A-94 07 449 betrifft ein Verfahren zur Herstellung transdermaler therapeutischer Systeme. Dazu wird zunächst eine wirkstoffhaltige Schicht in Form eines Laminats mit einer Trägerschicht und gegebenenfalls weiteren Hilfs- oder Schutzschichten als streifenförmige Bahn vorgelegt. Diese wird für sich allein oder in Verbindung mit wenigstens einer weiteren Schicht abschnittsweise mittig auf eine zweite breitere Bahn übertragen.
Als erfindungswesentlich wird dabei herausgestellt, daß die streifenförmige Bahn und die zweite Bahn mit unterschiedlicher Bewegungs- und Ruhephase und/oder unterschiedlicher Schrittlänge und/oder unterschiedlicher Geschwindigkeit schrittweise vorwärts bewegt werden.
Jeweils in der Ruhephase der Bahnen wird taktweise in derselben Vorrichtung das abschnittsweise Unterteilen der wirkstoffhaltigen Schicht und gegebenenfalls einer oder mehrerer weiterer Schichten mit Ausnahme der Trägerschicht quer zur Bahnrichtung in anwendergroße wirkstoffhaltige Abschnitte auf die zweite Bahn unter Abzug der Trägerfolie in vorzugsweise gleichen Abständen mittels einer in Bahnrichtung beweglichen Übergabeeinrichtung vorgenommen.
Es erfolgt also ein takt- beziehungsweise schrittweises Arbeiten der Bahnen.

Aufgabe der Erfindung war es somit, ein Verfahren zur Verfügung zu stellen, das klebende Stanzlinge ohne Stanzgitter, also verlustfrei, aus einer endlosen Bahn stanzt.

Gelöst wird diese Aufgabe durch ein Verfahren, wie es in dem Patentanspruch 1 beschrieben ist. Vorteilhafte Weiterbildungen des Verfahrens sind Gegenstand der Unteransprüche.

Demgemäß betrifft die Erfindung ein Verfahren zum verlustfreien Stanzen von klebenden Stanzlingen aus einer endlosen Bahn, die zumindest einseitig mit einem Trennlaminat eingedeckt ist.
Im ersten Verfahrensschritt wird die Bahn in eine Stanzvorrichtung geführt, wobei in der Schneidlinie der Stanzvorrichtung die einzelnen Konturen der Stanzlinge ohne Stanzgitter in der Bahn durchgestanzt werden.
Im zweiten Verfahrensschritt wird unmittelbar nach dem Stanzvorgang das Trennlaminat mittels einer Spendekante mit kleinem Umlenkradius abgezogen.
Im dritten Verfahrensschritt werden anschließend die einzelnen Stanzlinge auf ein zweites Trennlaminat aufgebracht, wobei das zweite Trennlaminat eine höhere Bahngeschwindigkeit aufweist als das erste Trennlaminat, wodurch eine Vereinzelung der Stanzlinge auf dem zweiten Trennlaminat stattfindet.

Die Bahngeschwindigkeit des zweiten Trennlaminats ist stets so zu wählen, daß sie größer ist als die des ersten Trennlaminats.
Die Differenzgeschwindigkeit zwischen dem ersten Trennlaminat und dem zweiten Trennlaminat legt gleichzeitig den Abstand fest, mit dem die einzelnen Stanzlinge auf dem zweiten Trennlaminat abgelegt werden:
Je höher die Differenzgeschwindigkeit, desto größer die Abstände.

Vorteilhafterweise wird die Stanzvorrichtung aus einer rotativen Schneidwalze und einer gleichläufigen Gegenwalze gebildet, wobei die Bahn in den Spalt zwischen der Schneidwalze und der Gegenwalze geführt wird, und wobei das Trennlaminat über die Gegenwalze geführt wird. In dem Spalt werden dann die einzelnen Konturen der Stanzlinge ohne Stanzgitter in der Bahn durchgestanzt.

Weiterhin bevorzugt besteht die Stanzvorrichtung aus einer Hubstanze, in die die Bahn gefördert wird. Hinter der Hubstanze kann ein Puffer vorgesehen sein, um den kontinuierlichen Fortgang des Verfahrens sicherzustellen. In diesem Fall erfolgt der zweite Verfahrensschritt unmittelbar hinter dem Puffer.

In einer weiteren vorteilhaften Ausführungsform des Verfahrens werden die Stanzlinge in einem Spalt zwischen zwei gleichläufigen Walzen auf das zweite Trennlaminat aufgebracht, wodurch die gezielte Führung der Stanzlinge gewährleistet ist. Weiterhin erreicht man in dem Spalt einen gewissen Anpreßdruck, mit dem die Stanzlinge auf das zweite Trennlaminat gedrückt werden, was das Verkleben der Stanzlinge auf dem Trennlaminat sicherstellt.

Die Bahn weist bevorzugt eine geringere Breite auf als das erste Trennlaminat und/oder das zweite Trennlaminat.

Besonders vorteilhaft ist das Verfahren einsetzbar, wenn die Bahn gebildet ist von einer beidseitig selbstklebenden Klebfolie, die eine solche auf Basis von thermoplastischem Kautschuk und klebrigmachenden Harzen ist, mit hoher Elastizität und geringer Plastizität, und die mit oder ohne Zwischenträger elastisch oder plastisch dehnbar ist. Eine derartige Klebfolie klebt insbesondere auf der oberen und auf der unteren Seite, aber auch die durch das Stanzen gebildeten Schnittkanten kleben. Somit kann die verlustfrei gestanzte Bahn nicht sehr lange gespeichert werden, ohne daß die einzelnen Stanzlinge wieder untereinander verkleben, was eine nachträglich durchzuführende Trennung erschwert, wenn nicht gar unmöglich macht.

Das Verfahren ist weiterhin zur Stanzung von Etiketten hervorragend geeignet. Die Etiketten können dabei aus einer einseitig klebend ausgerüsteten Bahn gestanzt werden. Diese Bahn kann dabei gebildet sein aus Lack, beispielsweise strahlengehärtetem Lack, oder einem Laminat aus Folien. Ein Beispiel für ein derartiges Laminat ist das Kaffeetütenventil, das zur Verpackung des Kaffees benötigt wird.

Auch für den Fachmann nicht vorherzusehen, erlaubt das erfindungsgemäße Verfahren bei elastisch oder plastisch dehnbaren Materialien, die oftmals sehr empfindlich sind und zum Reißen neigen, im Gegensatz zum herkömmlichen Gitterstanzen eine wesentlich höhere Bahngeschwindigkeit, denn die bisher nicht zu unterdrückende Gefahr, daß bei hohen Bahngeschwindigkeiten während des Gitterabzugs das Gitter abreißt, tritt im erfindungsgemäßen Verfahren nicht auf. So ist eine Steigerung der Geschwindigkeit bei den Klebfolien auf Basis von thermoplastischem Kautschuk und klebrigmachenden Harzen, die eine hohe Elastizität und eine geringe Plastizität aufweisen, um den Faktor 4 problemlos möglich.

Weiterhin zeichnet sich das Verfahren durch andere ökonomische und ökologische Vorteile aus. Zum einen kann das erste Trennlaminat, das im Prinzip lediglich die Funktion eines Zwischenträgers aufweist, mehrmals im Verfahren eingesetzt werden, bevor Reißer auftreten. Die in diesem Trennlaminat auftretenden Stanzkonturen stehen einem oftmaligen Recycling nicht im Wege.
Weiterhin kann auch das zweite Trennlaminat recycelt werden, wenn dieses nach Entfernen der Stanzlinge ebenfalls aufgewickelt wird. In diesem Trennlaminat sind keinerlei Spuren des Stanzvorganges zu beobachten, so daß das Trennlaminat mehrmals eingesetzt werden kann.

Insbesondere beim Stanzen von Etiketten erweist sich die fehlende Anstanzung des Trennlaminats als äußert vorteilhaft. Bei der industriellen Verwertung der Etiketten wird das zweite Trennlaminat oft gleich zum maschinellen Spenden des Etiketts verwendet. Bei sehr hohen Geschwindigkeiten und den damit verbundenen hohen Anforderungen an das Trennlaminat erweist sich ein angestanztes Trennlaminat als nicht ausreichend belastungsfähig. Es treten Reißer des Trennlaminats auf, was zu einer zeitaufwendigen Unterbrechung des üblicherweise kontinuierlichen Verfahrens führt. Eine derartige Schwächung des Trennlaminats ist beim erfindungsgemäßen Verfahren nicht zu beobachten.

Im folgenden soll das Verfahren anhand mehrerer Figuren verdeutlicht werden, ohne daß dies in irgendeiner Form einschränkend wirken soll.

Es zeigen die
- Figur 1: die zur Durchführung des Verfahrens notwendigen Einrichtungen, wobei als Stanzvorrichtung eine rotative Schneidwalze und eine gleichläufige Gegenwalze vorgesehen sind, und
- Figur 2: den Vorgang des Stanzens aus der endlosen Bahn mit der anschließenden Vereinzelung der Stanzlinge, und zwar dargestellt für die Bahnebene.

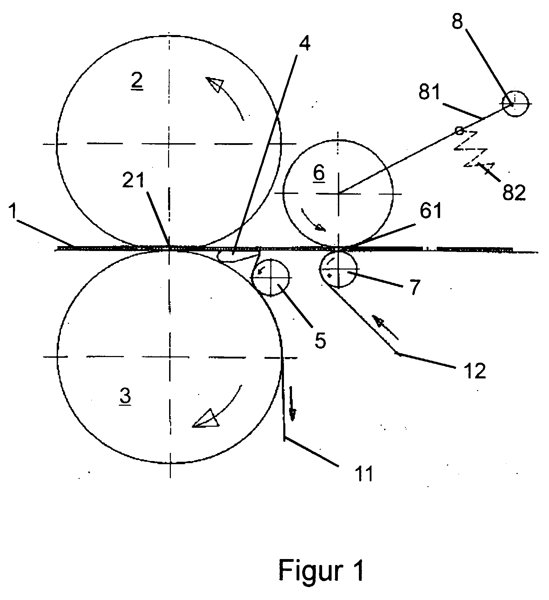

Wie in Figur 1 gezeigt, wird die endlose Bahn 1 mit einer Geschwindigkeit von 30 m/min in die Schneidlinie 21 zwischen der Schneidwalze 2 und der gleichläufigen Gegenwalze 3 geführt. Die Bahn 1 besteht aus einer beidseitig selbstklebenden Klebfolie auf Basis von thermoplastischem Kautschuk und klebrigmachenden Harzen. Diese Klebfolie ist sowohl auf der oberen Seite als auch auf der unteren Seite mit einem Trennlaminat in Form einer Trennfolie 11 eingedeckt, die über die Gegenwalze 3 geführt wird. Die Trennfolie 11 ist vorteilhafterweise breiter als die Bahn 1.
Der jeweilige Richtungssinn der Schneidwalze 2 und der Gegenwalze 3 ist durch die eingezeichneten Pfeile vorgegeben.

In der Schneidlinie 21 werden die Konturen der Stanzlinge 13, 14 in die Bahn 1 gestanzt, ohne daß ein Stanzgitter Verwendung findet. Das Durchstanzen erfolgt dabei bis auf die untere Trennfolie 11.

Unmittelbar nach der Schneidlinie 21 wird die untere Trennfolie 11 über eine Spendekante 4 abgezogen, wobei die Führung der Trennfolie 11 zunächst über eine kleine Rolle 5 erfolgt, die die Trennfolie 11 an die Gegenwalze 3 anlegt. Von der Gegenwalze 3 wird die Trennfolie 11 zu einer hier nicht dargestellten Wickelvorrichtung geführt. Der aus der Trennfolie 11 hergestellte Wickel kann erneut in dem Verfahren eingesetzt werden.
Aufgrund des kleinen Umlenkradius der Trennfolie 11 an der Spendekante 4 und aufgrund der Trägheit der gestanzten, aber noch zusammenhängenden Stanzlinge 13, 14 läuft die Bahn 1 nach dem Entfernen der Trennfolie 11 unbeeinflußt geradeaus, und zwar direkt in einen zweiten Walzenspalt 61, der von zwei ebenfalls gleichläufigen Walzen 6, 7 gebildet wird. Die Walzen 6, 7 weisen stets eine höhere Umfangsgeschwindigkeit auf als die Schneidwalze 2 und die Gegenwalze 3. Die obere Walze 6 ist über eine Vorrichtung 81 mit einer Aufhängung 8 verbunden. Mittels einer Feder 82, die an der Vorrichtung 81 angreift, kann der Druck, mit dem die Walze 6 auf die untere Walze 7 gepreßt wird, vorgegeben werden.
Im Walzenspalt 61 wird an die durchgestanzte Bahn 1 die zweite Trennfolie 12 von unten über die untere Walze 7 herangeführt. Die höhere Geschwindigkeit von 47 m/min der zweiten Trennfolie 12 führt dazu, daß die in der Bahn 1 zusammenhängenden Stanzlinge 13, 14 nunmehr vereinzelt werden.
Der sich endgültig einstellende Abstand der Stanzlinge 13, 14 auf der zweiten Trennfolie 12 hängt dabei von der Differenzgeschwindigkeit zwischen der ersten Trennfolie 11 und der zweiten Trennfolie 12 ab. Bei den angegebenen Geschwindigkeiten ergibt sich, daß auf eine Länge von 95 mm insgesamt fünf Stanzlinge 13, 14 mit einer Breite von 20 mm abgelegt werden.

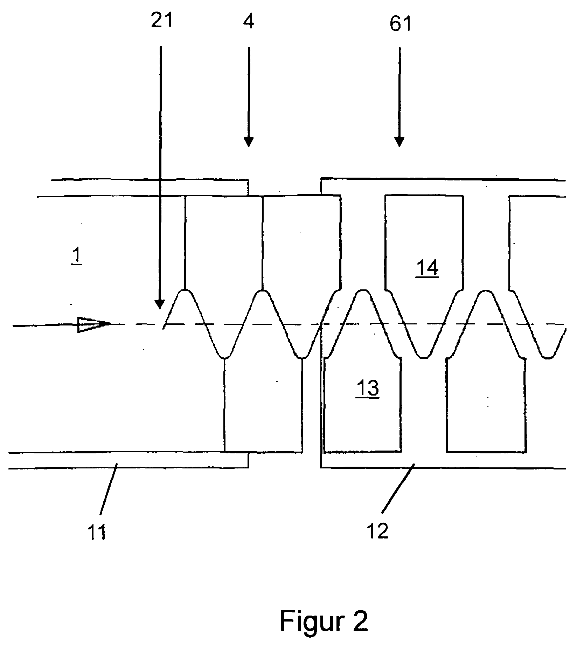

In Figur 2 ist das Verfahren mit Blick auf die Bahn 1 dargestellt. Die Bahn 1 läuft in Pfeilrichtung auf der ersten Trennfolie 11 in die Schneidlinie 21. In der Schneidlinie 21 findet der Stanzvorgang statt, in die Bahn 1 werden die Konturen der Stanzlinge 13, 14 eingestanzt. An der Spendekante 4 wird die erste Trennfolie 11 abgezogen, die gestanzte Bahn 1 läuft unbeeinflußt geradeaus weiter. Im zweiten Walzenspalt 61 wird zum einen die zweite Trennfolie 12 an die Bahn 1 herangeführt, zum anderen erfolgt wegen der höheren Geschwindigkeit der zweiten Trennfolie 12 gegenüber der ersten Trennfolie 11 die Auftrennung der gestanzen Bahn 1 in die einzelnen Stanzlinge 13, 14. Dabei weisen das erste Trennlaminat 11 und das zweite Trennlaminat 12 eine größere Breite auf als die Bahn 1.

## Patentansprüche

1. Verfahren zum verlustfreien Stanzen von klebenden Stanzlingen aus einer endlosen Bahn, die zumindest einseitig mit einem Trennlaminat eingedeckt ist,
dadurch gekennzeichnet, daß
a) die Bahn kontinuierlich in eine Stanzvorrichtung geführt wird, wobei in der Schneidlinie der Stanzvorrichtung die einzelnen Konturen der Stanzlinge ohne Stanzgitter in der Bahn durchgestanzt werden,
b) unmittelbar nach dem Stanzvorgang das Trennlaminat mittels einer Spendekante mit kleinem Umlenkradius abgezogen wird,
c) anschließend die einzelnen Stanzlinge auf ein zweites Trennlaminat aufgebracht werden, wobei das zweite Trennlaminat eine kontinuierliche Betriebsweise und eine höhere Bahngeschwindigkeit aufweist als das erste Trennlaminat, wodurch eine Vereinzelung der Stanzlinge auf dem zweiten Trennlaminat stattfindet.

2. Verfahren nach Anspruch 1, dadurch gekennzeichnet, daß
die Stanzvorrichtung von einer rotativen Schneidwalze und einer gleichläufigen Gegenwalze gebildet ist, wobei die Bahn in den Spalt zwischen der Schneidwalze und der Gegenwalze geführt wird, und wobei das Trennlaminat über die Gegenwalze geführt wird.

3. Verfahren nach Anspruch 1, dadurch gekennzeichnet, daß
die Stanzlinge auf das zweite Trennlaminat in einem Spalt zwischen zwei gleichläufigen Walzen aufgebracht werden.

4. Verfahren nach Anspruch 1, dadurch gekennzeichnet, daß
die Bahn eine geringere Breite aufweist als das erste Trennlaminat und/oder das zweite Trennlaminat.

5. Verfahren nach Anspruch 1, dadurch gekennzeichnet, daß
die Bahn gebildet ist von einer beidseitig selbstklebenden Klebfolie, die eine solche auf Basis von thermoplastischem Kautschuk und klebrigmachenden Harzen ist, mit hoher Elastizität und geringer Plastizität.

6. Verfahren nach Anspruch 5, dadurch gekennzeichnet, daß
die Klebfolie mit oder ohne Zwischenträger elastisch oder plastisch dehnbar ist.

7. Verfahren nach Anspruch 1, dadurch gekennzeichnet, daß
die klebenden Stanzlinge einseitig klebend ausgerüstete Etiketten sind.

## Claims

1. Method of wasteless punching of adhesive punched items from a continuous web which is covered on at least one side with a release laminate,
characterized in that
a) the web is passed continuously into a punching device, the individual contours of the punched items being punched through in the web, without a punched screen, in the cutting line of the punching device,
b) directly after the punching operation, the release laminate is peeled off by means of a dispensing edge with a small radius of deflection,
c) subsequently, the individual punched items are applied to a second release laminate which has a continuous operation and a higher belt speed than the first release laminate, as a result of which there is separation of the punched items on the second release laminate.

2. Method according to Claim 1, characterized in that the punching device is formed from a rotary cutting roller and a co-rotating counter-roller, the web being passed into the gap between the cutting roller and the counter-roller, and the release laminate being passed by way of the counter-roller.

3. Method according to Claim 1, characterized in that the punched items are applied to the second release laminate in a gap between two co-rotating rollers.

4. Method according to Claim 1, characterized in that the web is narrower than the first release laminate and/or the second release laminate.

5. Method according to Claim 1, characterized in that the web is formed from a double-sided self-adhesive film which is based on thermoplastic rubber and tackifying resins, and has high elasticity and low plasticity.

6. Method according to Claim 5, characterized in that the adhesive film is elastically or plastically extendable with or without an intermediate backing.

7. Method according to Claim 1, characterized in that the adhesive punched items are single-sided adhesive labels.

## Revendications

1. Procédé de découpage sans pertes d'articles adhésifs à partir d'une bande sans fin qui est recouverte au moins sur une face d'un film détachable, caractérisé en ce que
a) la bande est conduite en continu dans un dispositif de découpage, dans lequel les contours individuels des articles sont pré-découpés sur la bande, sans grille de découpage, dans la ligne de coupe du dispositif de découpage;
b) le film détachable est retiré immédiatement après l'opération de découpage, au moyen d'une arête de reprise à faible rayon de courbure;
c) les articles individuels sont ensuite appliqués sur un second film détachable, le second film détachable présentant un mode de fonctionnement continu et une plus grande vitesse de bande que le premier film détachable, ce qui permet d'effectuer un démariage des articles sur le second film détachable.

2. Procédé suivant la revendication 1, caractérisé en ce que le dispositif de découpage se compose d'un cylindre de coupe rotatif et d'un contre-cylindre concourant, dans lequel la bande est conduite dans la fente entre le cylindre de coupe et le contre-cylindre, et dans lequel le film détachable est mené sur le contre-cylindre.

3. Procédé suivant la revendication 1, caractérisé en ce que les articles sont appliqués sur le second film détachable dans une fente entre deux cylindres concourants.

4. Procédé suivant la revendication 1, caractérisé en ce que la bande présente une largeur plus faible que le premier film détachable et/ou que le second film détachable.

5. Procédé suivant la revendication 1, caractérisé en ce que la bande est constituée d'une feuille adhésive auto-collante à double face, qui est une feuille à base de caoutchouc thermoplastique et de résines de collage, présentant une élasticité élevée et une faible plasticité.

6. Procédé suivant la revendication 5, caractérisé en ce que la feuille adhésive peut s'allonger élastiquement ou plastiquement avec ou sans support intermédiaire.

7. Procédé suivant la revendication 1, caractérisé en ce que les articles adhésifs sont des étiquettes rendues adhésives sur une face.
